(19) Europäisches Patentamt
European Patent Office
Office européen des brevets

(11) **EP 0 951 132 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(51) Int Cl.:
***H02K 15/12*** *(2006.01)*

(21) Anmeldenummer: **99810257.8**

(22) Anmeldetag: **23.03.1999**

(54) **Wicklungsstab für die Hochspannungswicklung einer elektrischen Maschine sowie Verfahren zur Herstellung eines solchen Wicklungsstabes**

Winding bar for high voltage electric electric machines and method for manufacturing such a winding bar

Barre d'enroulement pour machine électrique de haute tension et procédé pour la fabrication d'une telle barre

(84) Benannte Vertragsstaaten:
**AT DE FR GB IT**

(30) Priorität: **18.04.1998 DE 19817287**

(43) Veröffentlichungstag der Anmeldung:
**20.10.1999 Patentblatt 1999/42**

(73) Patentinhaber: **Alstom Technology Ltd**
**5400 Baden (CH)**

(72) Erfinder:
• **Baumann, Thomas, Dr.**
**5430 Wettingen (CH)**
• **Fried, Reinhard**
**5415 Nussbaumen (CH)**
• **Joho, Reinhard**
**5022 Rombach (CH)**
• **Oesterheld, Jörg, Dr.**
**5413 Birmenstorf (CH)**

(56) Entgegenhaltungen:
**EP-A- 0 570 231**

• **PATENT ABSTRACTS OF JAPAN vol. 012, no. 038 (E-580), 4. Februar 1988 (1988-02-04) & JP 62 193103 A (FUJI ELECTRIC CO LTD), 25. August 1987 (1987-08-25)**
• **PATENT ABSTRACTS OF JAPAN vol. 011, no. 095 (E-492), 25. März 1987 (1987-03-25) & JP 61 247247 A (TOSHIBA CORP), 4. November 1986 (1986-11-04)**
• **PATENT ABSTRACTS OF JAPAN vol. 012, no. 493 (E-697), 22. Dezember 1988 (1988-12-22) & JP 63 206134 A (TOSHIBA CORP), 25. August 1988 (1988-08-25)**

**Beschreibung**

TECHNISCHES GEBIET

Die vorliegende Erfindung bezieht sich auf das Gebiet der elektrischen Maschinen. Sie betrifft einen Wicklungsstab für die Hochspannungswicklung, insbesondere Statorwicklung, einer elektrischen Maschine, umfassend eine Mehrzahl von Leitern, welche über- und/ oder nebeneinander angeordnet sind und ein Leiterbündel mit einem rechteckigen Querschnitt bilden, wobei das Leiterbündel aussen allseitig von einer Isolierung umgeben ist.

Die Leiter können dabei elektrisch parallel liegen (Stabwicklung) oder untereinander seriegeschaltet sein (Spulenwicklung). Die Spannung zwischen den Leitern ist aber im Normalbetrieb bedeutend kleiner als diejenige über der Stabisolierung.

Die Erfindung betrifft weiterhin ein Verfahren zum Herstellen eines solchen Wicklungsstabes.

STAND DER TECHNIK

Die JP-A-63206134 und JP-A-61247247 offenbaren jeweils einen Wicklungsstab entsprechend dem Stand der Technik.

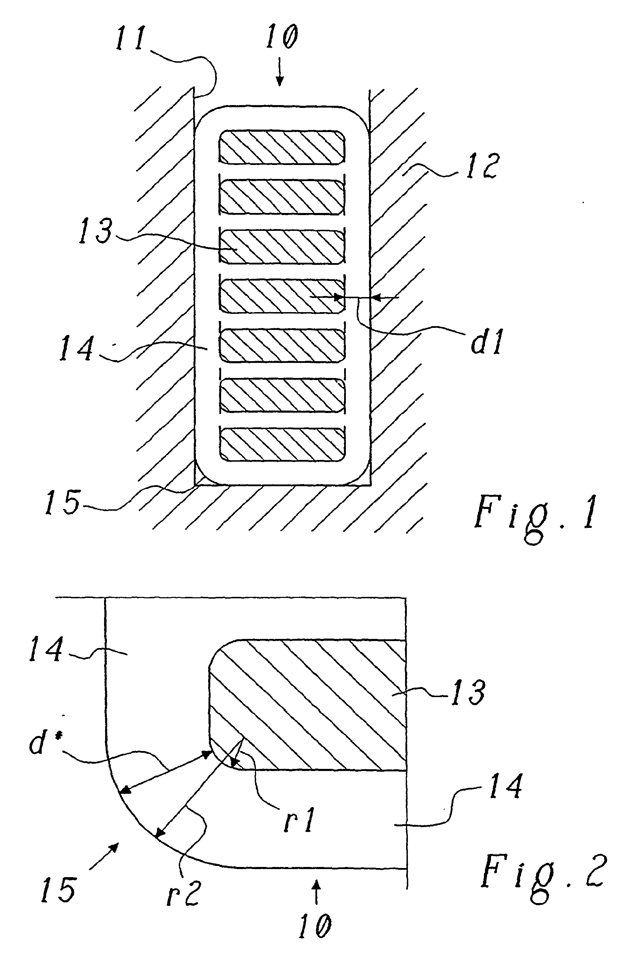

Wicklungsstäbe, wie sie beispielsweise in Statoren von rotierenden elektrischen Maschinen Verwendung finden, haben häufig den in Fig. 1 dargestellten beispielhaften Querschnitt. Der Wicklungsstab 10, der in eine dafür vorgesehene Nut 11 im Statorpaket 12 eingelegt ist, umfasst ein Bündel von einzelnen Leitern 13, die parallel über- und/ oder nebeneinander verlaufend angeordnet sind. Das Leiterbündel, das in aller Regel einen rechteckigen Querschnitt mit Kanten 15 aufweist, ist allseitig von einer Isolierung 14 umgeben. Bedingt durch die Form ist das elektrische Feld an den Kanten 15 grösser als auf den Flachseiten des Wicklungsstabes 10. Dementsprechend ist die Kantenregion besonders anfällig gegen elektrischen Durchbruch bzw. elektrisches Langzeitversagen.

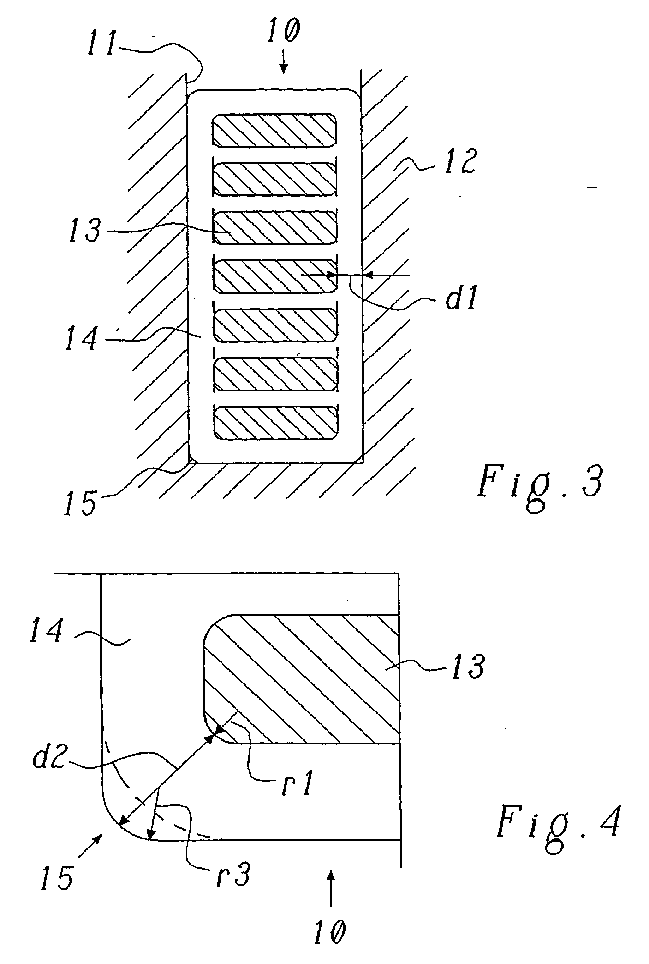

Zur Erzielung bestmöglicher Nuffüllung mit Leitermaterial und bestmöglichem Wärmeübergang über die Stabisolierung wird nach möglichst dünner Isolierung, zumindest an den flächenmässig dominierenden Flachseiten des Stabes gestrebt. Die herkömmliche Herstellung der Isolierung 14 bei Wicklungsstäben mit rechteckigem Querschnitt ist beispielsweise in "Sequenz: Herstellung der Wicklungen elektrischer Maschinen", Springer-Verlag 1973, Seite 128-129, beschrieben. Danach werden Bänder von Glimmerpapier, welches zur Erhöhung der Zug- und Einreissfestigkeit auf einen Träger von Glasgewebe kaschiert ist, lagenförmig um den Stab bzw. das Leiterbündel gewickelt, anschliessend mit Kunststoffharz getränkt, eingeformt und bei erhöhten Temperaturen ausgehärtet. Die Dicke (d1 in Fig. 1) der Isolierung 14 ist bei diesem Verfahren auf allen Flachseiten des Wicklungsstabes 10 in etwa gleich. An den Kanten 15 weist sie theoretisch dieselbe Dicke d1 auf (siehe vergrösserten Teilausschnitt in Fig. 2), wird jedoch in der Praxis geringer infolge des lokal erhöhten Anpressdruckes (kleine Auflagefläche im Kantenbereich), der entsteht, wenn das Band mit gleichbleibendem Wickelzug und gleichbleibender Geschwindigkeit um das Leiterbündel gewickelt wird. Nach der Formel für koaxiale Zylinder kann das elektrische Maximalfeld an den Kanten 15 angegeben werden als

$$E_{\max} = \frac{U}{r1 \cdot \ln \frac{r2}{r1}} = \frac{U}{r1 \cdot \ln \frac{r1+d*}{r1}} \;.$$

Dabei sind (gemäss Fig. 2) U die Belastungsspannung, r1 der innere Krümmungsradius der Isolation 14, r2 der äussere Krümmungsradius der Isolation 14, und d* die (meist gegenüber d1 reduzierte) Dicke der Isolation 14 im Bereich der Kanten 15. Hieraus ist ersichtlich, dass das elektrische Feld, welches an der Kante 15 bei technisch einfach zu realisierenden Radien r1 ≤ 3 mm sowieso schon deutlich höher ist als im Bereich der Flachseiten, nochmals zunehmen wird als Folge der reduzierten Isolierungsdicke d*, wie sie sich bei vielen Herstellungsverfahren ergibt.

Die Auswirkungen der erhöhten Feldstärke können insbesondere bei elektrischer Dauerbelastung beträchtlich sein, da die Versagensrate $t^{-1}$ stark überlinear mit dem elektrischen Feld wächst. Es gilt grob ein Potenzgesetz zwischen der Lebenszeit t (in h) und dem elektrischen Feld E (in kV/mm) gemäss

$$\frac{t}{t_0} = K \cdot \left[ \frac{E}{E_0} \right]^{-n},$$

wobei $t_0$ = 1 h und $E_0$ = 1 kV/mm sind. Für einen Lebensdauerexponenten n = 8 (dies ist ein häufiger Wert bei Isoliermaterialien für rotierende elektrische Maschinen nach dem Stand der Technik) bedeutet dies z.B., dass eine Erhöhung der Feldstärke um 20% die Lebensdauer auf weniger als ¼ verringert, umgekehrt aber eine Erniedrigung des Feldes um 20% die Lebensdauer um einen Faktor von etwa 6 erhöht.

Eine Erniedrigung der Kantenfeldstärke liesse sich nun beispielsweise dadurch erreichen, dass man von einer Isolierung 14 mit konstanter Dicke d1 (= d*), wie sie in Fig. 1 bzw. Fig. 2 gezeigt ist, auf eine Isolierung mit eckiger Aussenkontur (r2= 0) überginge. Wenn man unter dieser Annahme für einen Wert von d1 = 2,5 mm und r1 = 2,5 mm eine auf dem Finite-Elemente-Verfahren basierende Computermodellrechnung durchführt, ergibt sich eine Reduktion der maximalen Feldstärke $E_{max}$ im Kantenbereich von 11%, was bei einem Lebensdauerexponenten von 8 einer rechnerischen Lebensdauerverlängerung um den Faktor 2,5 entspricht. Dieser Faktor erhöht sich überproportional mit höherem Lebensdauerexponenten (z.B. Faktor 4 bein = 12).

## DARSTELLUNG DER ERFINDUNG

Es ist Aufgabe der Erfindung, einen Wicklungsstab zu schaffen, bei welchem mit einfachen Mitteln eine deutliche Verringerung der Maximalfeldstärke im Kantenbereich erzielt wird, ohne dass die Dicke der Isolation im Bereich der Flachseiten erhöht werden muss, sowie ein Verfahren zu dessen Herstellung anzugeben.

Die Aufgabe wird bei einem Wicklungsstab der eingangs genannten Art dadurch gelöst, dass die Dicke der Isolierung an den Kanten des Wicklungsstabes grösser ist als die Dicke der Isolierung an den Flachseiten des Wicklungsstabes. Durch die Vergrösserung der Isolierungsdicke im Kantenbereich ergibt sich eine Entzerrung der Feldlinien des elektrischen Feldes, die zu der gewünschten Reduzierung der Kantenfeldstärke führt.

Eine erste bevorzugte Ausführungsform des erfindungsgemässen Wicklungsstabes ist dadurch gekennzeichnet, dass die Isolierung an den Kanten des Wicklungsstabes eine Krümmung mit einer inneren Krümmungskontur und einem äusseren Krümmungsradius aufweist, und dass der äussere Krümmungsradius kleiner ist als die Summe aus dem äquivalenten inneren Krümmungsradius der inneren Krümmungskontur und der Dicke der Isolierung an den Flachseiten des Wicklungsstabes. Durch die Beibehaltung eines von Null verschiedenen äusseren Krümmungsradius ergibt sich eine für die Feldverteilung und für die mechanische Stabilität günstige gleichmässige Aenderung der Dicke im Kantenbereich.

Grundsätzlich lässt sich eine derartige Formung der Kantenbereiche mit einer gewickelten Isolierung erreichen, wenn für die Isolierung thermoplastische Bänder verwendet werden. Besonders einfach wird die Formung jedoch dann, wenn gemäss einer zweiten bevorzugten Ausführungsform die Isolierung aus einem thermoplastischen Polymer besteht, in welchem Füllstoffpartikel aus einem Isolierstoff verteilt sind. In einer bevorzugten Weiterbildung dieser werden als thermoplastisches Polymer Polyetheretherketon (PEEK) und als Füllstoffpartikel Glimmerplättchen verwendet. Anstelle des PEEK können aber mit gutem Erfolg auch andere Stoffe wie z.B. Polysulfon (PSU) oder Polyäthersulfon (PES) verwendet werden.

Gemäss einer weiteren bevorzugten Ausführungsform der Erfindung wird die zur Reduktion der Kantenfeldstärke eingesetzte spezielle Formgebung der Isolierung im Kantenbereich auch auf die Leiter des von der Isolierung umgebenen Leiterbündels ausgedehnt, dadurch, dass zumindest die im Bereich der Kanten angeordneten Leiter jeweils aus einem Bündel einzelner, isolierter, insbesondere miteinander verseilter, Drähte bestehen. Hierdurch wird es möglich, die Leiter selbst durch Formpressen in eine Form zu bringen, die zu einer weiteren Erhöhung der Isolierungsdicke im Kantenbereich führt. Die Drähte können dabei beispielsweise als Runddrähte ausgebildet sein, aber auch (nach Art von Miniatur- Roebelstäben) vierkantig sein.

In einer bevorzugten Weiterbildung dieser Ausführungsform sind die Bündel aus den Drähten zur Erzielung einer glatten Aussenkontur mit einer halbleitenden Bindemasse imprägniert, und ist in dem Bündel aus Drähten zur Ankopplung an die halbleitende Bindemasse wenigstens ein Draht blank belassen oder blank gemacht. Hierdurch ist es möglich, einen ungünstigen Einfluss der Drahtbündel auf die Feldverteilung zu minimieren. Ueber die Glättung der Aussenkontur eines einzelnen Leiters hinaus kann die Aussenkontur des gesamten Leiterbündels geglättet werden, wenn gemäss einer weiteren Ausführungsform die Leiter des Wicklungsstabes voneinander durch Zwischenräume beabstandet sind, und die Zwischenräume mit einer halbleitenden Ueberbrückungsmasse gefüllt sind, die vorzugsweise (in Stabrichtung) ein zumindest abschnittweise nichtlineares, spannungsbegrenzendes Verhalten aufweist.

Das erfindungsgemässe Verfahren zum Herstellen eines Wicklungsstabes, bei welchem Wicklungsstab die Isolierung im wesentlichen aus einem thermoplastischen Material besteht, ist dadurch gekennzeichnet, dass der Wicklungsstab nach dem Aufbringen der Isolierung einem Kalibrierprozess unterzogen wird, bei welchem dem verformbaren Material der Isolierung eine vorgegebene Randkontur aufgeprägt wird, welche zu einer erhöhten Dicke der Isolierung im Bereich der Kanten führt. Durch die Entkopplung von Auftrags- und Formungsprozess lassen sich die beiden Prozessschritte getrennt optimieren und gleichzeitig kontinuierlich durchführen. Die Isolierung lässt sich dabei in besonders gleichmässigen und gut formbaren Schichten aufbringen, wenn gemäss einer ersten bevorzugten Ausführungsform des erfindungsgemässen Verfahrens die Isolierung durch ein Verfahren aus der Reihe der Pulverbeschichtungsverfahren, insbesondere Sprühsintern oder thermisches Spritzen, und Extrusionsverfahren aufgebracht wird.

Das erfindungsgemässe Verfahren lässt sich besonders schnell und präzise durchführen, wenn gemäss einer weiteren bevorzugten Ausführungsform zum Durchführen des Kalibrierprozesses Kalibrierwalzen, welche parallel zu den Mittelebenen des Wicklungsstabes und in einem festen Abstand davon angeordnet sind, relativ zum Wicklungsstab über dessen Oberflächen bewegt werden., und innerhalb des Kalibrierprozesses mittels zusätzlicher Kantenrollen den Kanten des Wicklungsstabes ein vorgegebener Krümmungsradius aufgeprägt wird.

Weitere Ausführungsformen ergeben sich aus den abhängigen Ansprüchen.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1    im Querschnitt einen in eine Statornut eingelegten Wicklungsstab nach dem Stand der Technik mit einer gewickelten Isolierung mit im wesentlichen konstanter Dicke d1;

Fig. 2    einen Ausschnitt im Kantenbereich des Wicklungsstabes nach Fig. 1;

Fig. 3    die zu Fig. 1 vergleichbare Darstellung eines ersten Ausführungsbeispiels der Erfindung, bei welchem durch Verringerung des äusseren Krümmungsradius r3 der Isolierung an der Kante die Dicke der Isolierung in diesem Bereich erhöht wird;

Fig. 4    eine zu Fig. 2 vergleichbare Darstellung des Kantenausschnitts von Fig. 3;

Fig. 5    eine zu Fig. 3 vergleichbare Darstellung eines zweiten Ausführungsbeispiels der Erfindung, bei welchem zur weiteren Erhöhung der Isolierungsdicke im Kantenbereich der angrenzende Leiter stärker abgerundet wird;

Fig. 6    eine zu Fig. 4 vergleichbare Darstellung des Kantenausschnitts von Fig. 5;

Fig. 7    eine schematisierte Darstellung der beim Kalibrierungsvorgang nach der Erfindung auftretenden Effekte; und

Fig. 8    in einer perspektivischen Darstellung ein Ausführungsbeispiel des Kalibrierprozesses nach dem erfindungsgemässen Verfahren.

WEGE ZUR AUSFÜHRUNG DER ERFINDUNG

In den Fig. 3 und 4 ist ein erstes bevorzugtes Ausführungsbeispiel des Wicklungsstabes nach der Erfindung im Querschnitt wiedergegeben. Die Vergrösserung der Dicke der Isolierung 14 des Wicklungsstabes 10 im Bereich der Kanten 15 wird in diesem Fall dadurch erreicht, dass der Krümmungsradius r3 an der Aussenseite der Isolierung 14 kleiner gewählt wird als die Summe aus dem Krümmungsradius r1 auf der Innenseite der Isolierung 14 (bzw. des Leiters 13) und der Dicke d1 der Isolierung auf den Flachseiten der Isolierung (siehe Fig. 3). Dadurch ergibt sich im Vergleich zum herkömmlichen Fall aus Fig. 1 und 2 (in Fig. 4 strichliert eingezeichnet) eine Dicke d2 der Isolierung 14 im Kantenbereich, die grösser ist als die Dicke d1. Für den Extremfall mit r3 = 0 (scharfe Aussenkante der Isolierung 14) ist die Dicke d2 maximal

$$d2_{max}^{\cdot} = \left[\sqrt{2}(r1 + d1)\right] - r1 \; .$$

Sei z.B. r1 = 2,5 mm und d1 = 4 mm, so ergibt sich $d2_{max}$ = 6,69 mm, was einer Steigerung der maximalen Isolationsdicke an der Kante 15 um 67% gegenüber dem Wert d1 auf den Flachseiten entspricht.

Ausgehend vom konventionellen Wickel- und Tränkprozess als Herstellungsverfahren von Isolierungen für die Leiter in rotierenden elektrischen Maschinen sind scharfe Aussenkanten für die Isolierung 14 theoretisch machbar durch eine Deformation der Isolierung im imprägnierten, aber noch nicht ausgehärteten Zustand. Dies setzt eine Fliessfähigkeit der Isolierung voraus. Da jedoch der üblicherweise verwendete Glasträger des Glimmerbandes sehr zugfest ist, wird ein hinreichender Fluss der Isolierung nur dann stattfinden, wenn das Glas/Glimmerband sehr lose um den Leiterstab gewickelt ist (Wickelzug annähernd gleich 0). Eine derartige Isolierung hat jedoch den Nachteil, dass die Bandlagen extrem leicht verrutschen, Falten bilden können und somit eine gleichmässige Bewicklung des Leiterbündels nicht mehr gewährleistet ist. Eine gleichmässige Bewicklung ist aber ein Grundvoraussetzung für eine homogene und funktionsfähige Isolierung.

Eine hinreichend deformierbare Isolation ist nur dann zu erwarten, wenn ein Herstellungsverfahren für die Isolierung 14 gewählt wird, bei dem kein Glasträger verwendet wird. Diese Voraussetzung erfüllen beispielsweise die Pulverbeschichtungsverfahren Sprühsintern und thermisches Spritzen, Extrusionsverfahren sowie Verfahren, bei denen das Leiterbündel mit thermoplastischen Bändern umwickelt und anschliessend heiss verpresst wird (siehe dazu beispielsweise die Druckschrift EP-A2-0 660 336). Alle genannten Verfahren geben für sich genommen noch nicht notwendigerweise den gewünschten Effekt der Dickenerhöhung an den Kanten; es ist sogar denkbar, dass, wenn keine zusätzlichen Vorkehrungen getroffen werden, die Dicke der Isolierung 14 an den Kanten 15 geringer ausfällt. Für die Formung der Kanten ist daher ein zusätzlicher Bearbeitungsschritt notwendig. Eine weitere notwendige Bedingung ist, dass die verwendete Isoliermasse, vorzugsweise ein Polymer, in einem weiten Temperaturbereich plastisch verformbar ist.

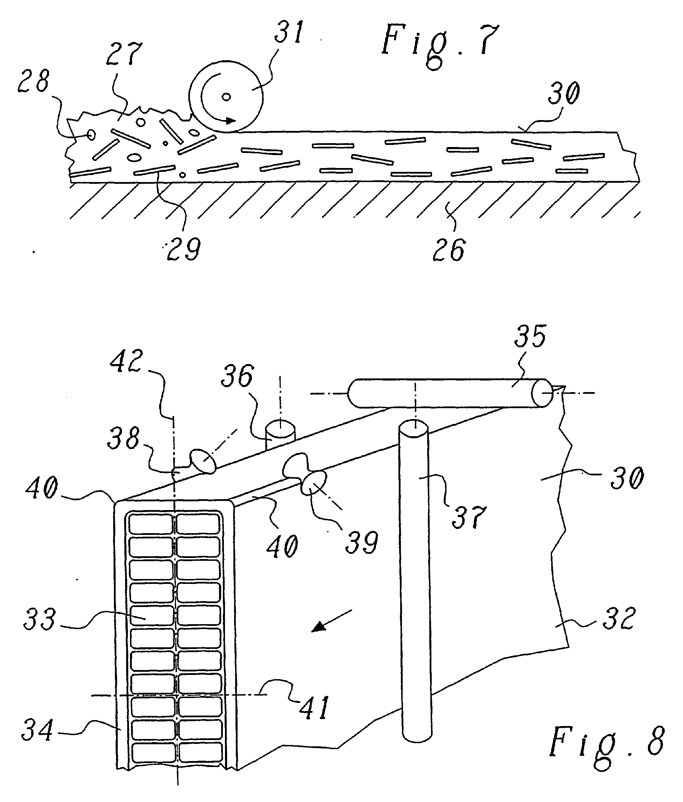

Die gewünschte zielgerichtete Deformation der Isoliermasse (des Polymers) im Kantenbereich lässt sich dann gemäss Fig. 7 und 8 durch ein sogenanntes Kalibrieren der Isolierung 34 kurz nach dem Aufspritzen (gilt für thermisches Spritzen) bzw. nach dem Sintern (gilt für Sprühsintern) realisieren, indem Kalibrierwalzen bzw. -rollen auf den Flachseiten der Isolierung entsprechend der schematisierten Darstellung in Fig. 7 in definierter Weise über das noch verformbare Isoliermaterial geführt werden. Die auf die Unterlage 26 aufgebrachte Isoliermasse 27, die neben den untergemischten Füllstoffpartikeln 29 (z.B. Glimmerplättchen) auch noch Luftblasen 28 enthält, wird dabei durch die Kalibrierwalze 31, die in definiertem Abstand über die Unterlage 26 gerollt wird, verdichtet und in der Dicke vergleichmässigt.

In einer bevorzugten Ausführungsform des Verfahrens wird die Isoliermasse durch sukzessives Auftragen (Aufspritzen) mehrerer dünner Schichten gebildet. Das Kalibrieren wird dann nach jedem Spritzvorgang durchgeführt. Es ergeben sich hierdurch zusätzlich positive Effekte aufgrund dessen, dass die eventuell vorhandene Luftblasen 28 aus der Isolierung herausgedrückt werden, und dass kurzfaserige oder plättchenförmige Füllstoffpartikel 29 in eine eventuell gewünschte, gerichtete Lage parallel zur Oberfläche orientiert werden (rechte Seite Fig. 7).

Beispiel 1:

Ein mechanisches Gemisch aus Polyetheretherketon (PEEK) und Glimmer im Mengenverhältnis 1:1 wird bei Raumtemperatur auf einen Rechteckleiter (mit Leitern 33) mittels elektrostatischem Spritzen (Untervariante des Sprühsinterverfahrens) aufgetragen. Es bleibt allseitig eine Schicht von ca. 0,2 mm Dicke haften. Der Polymeranteil des Pulvers wird durch Erwärmen in einem Umluftofen (380°C, 10 min) verschmolzen. Direkt anschliessend wird (Fig. 8) der Wicklungsstab 32 durch jeweils zwei hintereinanderliegende Walzenpaare (Kalibrierwalzen 35, 36, 37) auf beiden Stirn- und Breitseiten kalibriert. Die Kalibrierwalzen 35, 36, 37 sind dabei parallel zu den Mittelebenen 41, 42 des Wicklungsstabes 32 und in einem festen Abstand davon angeordnet. Um einen zu starken Wärmeentzug und ein dadurch bedingtes verfrühtes Verfestigen des Polymers zu vermeiden, bestehen die Rollen vorzugsweise aus Glasröhren oder einem anderen warmfesten Material mit möglichst geringer Wärmeleitfähigkeit. Die Kalibrierung kann realisiert werden, indem entweder der Wicklungsstab 32 zwischen den feststehenden Kalibrierwalzen 35, 36, 37 hindurchgeführt wird (Pfeilrichtung in Fig. 8), oder vorteilhafter, indem die Walzen über den feststehenden Stab geführt werden (Konzept Roboter oder Wickelmaschine).

Beispiel 2:

Wie in Beispiel 1, jedoch mit geheizten Kalibrierwalzen 35, 36, 37. Die Walzentemperatur beträgt dabei etwa 330°C.

Beispiel 3:

Ein mechanisches Gemisch aus Polyetheretherketon (PEEK) und Glimmer im Mengenverhältnis 1:1 wird auf einen Rechteckleiter mittels Flammspritzen bis zur gewünschten Enddicke aufgetragen. Der Leiter ist dabei auf etwa 180°C vorgeheizt. Das Kalibrieren erfolgt entsprechend Beispiel 1 und 2.

Beispiel 4:

Wie Beispiel 3, jedoch wird die Enddicke nicht in einem einzigen Durchgang erreicht, sondern durch wiederholtes Spritzen und Kalibrieren dünner Schichten mit einer Dicke von ca. 0,2 mm. Dieses Vorgehen hat gegenüber Beispiel 3 den Vorteil, dass die Glimmerplättchen sich in der gewünschten Art parallel zur Oberfläche orientieren und der Blasengehalt der Isolierung praktisch auf Null zurückgeht.

Beispiel 5:

Wie Beispiel 4, jedoch werden (Fig. 8) neben den Flachseiten des Wicklungsstabes 32 auch die Kanten 40 mit speziellen Kantenrollen 38, 39 kalibriert, die in Prozessrichtung vorzugsweise hinter den Kalibrierwalzen 35, 36, 37 angeordnet sind. Hierdurch wird ein äusserer Krümmungsradius (r3 in Fig. 4) der Isolierung 34 definiert und es wird erreicht, dass die Glimmerplättchen in dem elektrisch besonders heiklen Kantenbereich in günstiger Weise ausgerichtet sind.

Beispiel 6:

Wie Beispiele 1 bis 5, jedoch wird statt des PEEK/Glimmer-Gemisches ein PEEK/Glimmer-Compound verarbeitet.

Beispiel 7:

Um einen Rechteckleiter werden Bänder, bestehend aus Polysulphon (PSU)- gefüllt mit 30 Masse-% Glimmer - gewickelt. Die Anzahl Lagen an aufgewickelten Bändern ist 5-10% grösser als es der gewünschten Isolierungsdicke entspricht. Nach dem Bewickeln erfolgt die Kalibrierung entsprechend Beispiel 2 mit geheizten Walzen. Die Walzentemperatur beträgt dabei 250°C.

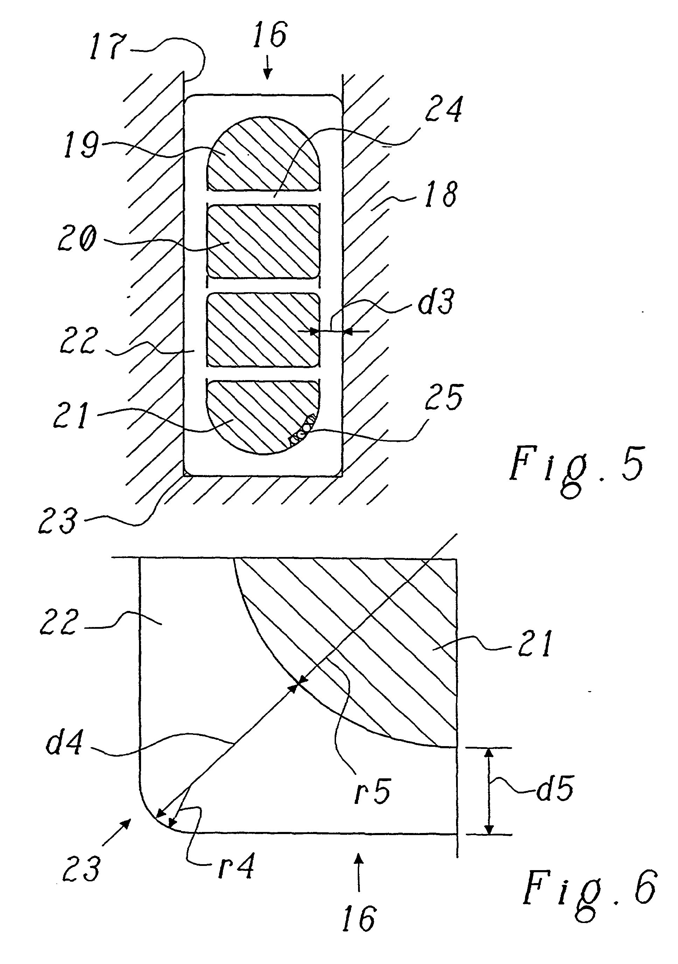

Ein weiteres bevorzugtes Ausführungsbeispiel für einen Wicklungsstab nach der Erfindung ist in den Fig. 5 und 6 wiedergegeben. Der Wicklungsstab 16, der in die Nut 17 eines Statorpakets 18 eingelegt ist, umfasst eine Mehrzahl von Leitern 19, 20, 21, die von einer Isolierung 22 umgeben sind. Zumindest die äusseren Leiter 19, 21, vorzugsweise auch die anderen Leiter 20, bestehen in diesem Fall aus verseilten, isolierten Drähten 25. Die äusseren Leiter 19, 21 werden nach den Prinzipien der Feldtheorie (Rogowski-Profile) abgerundet (Krümmungsradius r5). Die Abrundung der Leiter 19, 21 wird durch die Strukturierung in die Drähte 25 einfach gemacht. Durch die Abrundung der Leiter 19, 21 ergibt sich gegenüber der Dicke d3 an den Flachseiten (Fig. 5) eine erhöhte Dicke d4 im Bereich der Kanten 23 (Fig. 6), die dadurch noch vergrössert werden kann, dass der Krümmungsradius r4 an der äusseren Kante der Isolierung 22 verkleinert wird.

Die (minimale) Dicke d5 zur Schmalseite des Wicklungsstabes 16 hin lässt sich dabei nach den folgenden Formeln bestimmen:

$$d3 = \frac{U}{E_{zul}}$$

mit der Betriebsspannung U und der maximal zulässigen Feldstärke $E_{zul}$. Für d5 gilt dann

$$E_{zul} = \frac{2U\sqrt{\left(\frac{a}{2 \cdot r5}\right)^2 - 1}}{(a - 2 \cdot r5)\ln\left[\frac{a}{2 \cdot r5} + \sqrt{\left(\frac{a}{2 \cdot r5}\right)^2 - 1}\right]}$$

mit

$$a = 2 \cdot r5 + 2 \cdot d5 \ .$$

Durch Einsetzen der Gleichungen ineinander und Auflösen nach d5 kann dann beispielsweise die Dicke d5 in Abhängigkeit von d3 berechnet werden. Die kreisförmige Ausgestaltung ist beispielhaft angegeben. Eine noch weitergehende Optimierung hinsichtlich der Feldstärke kann durch Verwendung von nicht exakt kreisförmigen Krümmungskonturen der Leiter 19, 21 gefunden werden.

Um eine hinsichtlich der elektrischen Feldstärke günstigere glatte Aussenkontur des Leiterbündels 19, 20, 21 in der Isolierung 22 zu erzielen, können die Zwischenräume 24 zwischen den Leitern 19, 20, 21 mit einer halbleitenden Ueberbrückungsmasse ausgefüllt sein. Ein vergleichbarer Effekt ergibt sich, wenn der "grüne" Stab, d.h. das Leiterbündel vor der Einbettung in die Isolierung 22, mit einem halbleitenden Anstrich versehen wird. Besteht die halbleitende Ueberbrückungsmasse bzw. der halbleitende Anstrich aus einem Material, welches ein elektrisch nichtlineares Verhalten aufweist, können zusätzlich Spannungsstosswellen zwischen den Leitern 19, 20, 21 linear verteilt werden.

Eine weitere Verbesserung ergibt sich, wenn die Drähte 25, aus denen die Leiter 19, 20, 21 bestehen, nach dem Verseilen in einer Presse komprimiert werden, um den Cu-Anteil im Leiter möglichst gross zu halten. Insbesondere ist es vom elektrischen Verhalten her günstig, wenn die aus den Drähten 25 bestehenden Leiter in eine Form gepresst und mit einer halbleitenden Bindemasse imprägniert werden. Auch hierdurch wird eine für die maximale Feldstärke wichtige glatte Aussenkontur erreicht. Die Ankopplung an die halbleitende Bindemasse wird dabei vorzugsweise dadurch bewirkt, dass wenigstens ein Runddraht blank belassen wird.

BEZUGSZEICHENLISTE

| | |
|---|---|
| 10,16 | Wicklungsstab |
| 11,17 | Nut |
| 12,18 | Statorpaket |
| 13 | Leiter |
| 14,22 | Isolierung |
| 15,23 | Kante |
| 19,20,21 | Leiter |
| 24 | Zwischenraum |
| 25 | Runddraht |
| 26 | Unterlage |
| 27 | Isoliermasse |
| 28 | Luftblase |
| 29 | Füllstoffpartikel |
| 30 | Oberfläche |
| 31 | Kalibrierwalze |
| 32 | Wicklungsstab |
| 33 | Leiter |
| 34 | Isolierung |
| 35,36,37 | Kalibrierwalze |
| 38,39 | Kantenrolle |
| 40 | Kante |
| 41,42 | Mittelebene |
| r1,..,r5 | Krümmungsradius |
| d*,d1,..,d5 | Dicke (Isolierung) |

**Patentansprüche**

1. Wicklungsstab (10, 16, 32) für die Hochspannungswicklung, insbesondere Statorwicklung, einer elektrischen Maschine, umfassend eine Mehrzahl von Leitern (13; 19,..,21; 33), welche über- und/ oder nebeneinander angeordnet sind und ein Leiterbündel mit einem rechteckigen Querschnitt bilden, wobei das Leiterbündel aussen allseitig von einer Isolierung (14, 22, 34) umgeben ist, **dadurch gekennzeichnet, dass** die Dicke (d2, d4) der Isolierung (14, 22, 34) an den Kanten (15, 23, 40) des Wicklungsstabes (10, 16, 32) grösser ist als die Dicke (d1, d3) der Isolierung (14, 22, 34) an den Flachseiten des Wicklungsstabes (10, 16, 32).

2. Wicklungsstab nach Anspruch 1, **dadurch gekennzeichnet, dass** die Isolierung (14, 22, 34) an den Kanten (15, 23, 40) des Wicklungsstabes (10, 16, 32) eine Krümmung mit einer inneren Krümmungskontur (r1, r5) und einem äusseren Krümmungsradius (r3, r4) aufweist, und dass der äussere Krümmungsradius (r3, r4) kleiner ist als die Summe aus dem äquivalenten inneren Krümmungsradius (r1, r5) der inneren Krümmungskontur und der Dicke (d1, d3) der Isolierung (14, 22, 34) an den Flachseiten des Wicklungsstabes (10, 16, 32).

3. Wicklungsstab nach Anspruch 2, **dadurch gekennzeichnet, dass** die innere Krümmungskontur (r1, r5) kreisförmig ist.

4. Wicklungsstab nach Anspruch 2, **dadurch gekennzeichnet, dass** die innere Krümmungskontur feldoptimiert ist.

5. Wicklungsstab nach einem der Ansprüche 1 bis 4, **dadurch gekennzeichnet, dass** die Isolierung (14, 22, 34) aus einem thermoplastischen Polymer besteht, in welchem Füllstoffpartikel (29) aus einem Isolierstoff verteilt sind.

6. Wicklungsstab nach Anspruch 5, **dadurch gekennzeichnet, dass** als thermoplastisches Polymer Polyetheretherketon (PEEK) und als Füllstoffpartikel (29) Glimmerplättchen verwendet werden.

7. Wicklungsstab nach einem der Ansprüche 1 bis 6, **dadurch gekennzeichnet, dass** zumindest die im Bereich der Kanten (23) angeordneten Leiter (19, 21) jeweils aus einem Bündel einzelner, isolierter, insbesondere miteinander verseilter, Drähte (25) bestehen.

8. Wicklungsstab nach Anspruch 7, **dadurch gekennzeichnet, dass** die Bündel aus den Drähten (25) zur Erzielung einer glatten Aussenkontur mit einer halbleitenden Bindemasse imprägniert sind.

9. Wicklungsstab nach einem der Ansprüche 1 bis 8, **dadurch gekennzeichnet, dass** die Leiter (13; 19,..,21; 33) des Wicklungsstabes (10, 16, 32) voneinander durch Zwischenräume (24) beabstandet sind, und dass die Zwischenräume (24) zur Erzielung einer glatten Aussenkontur mit einer halbleitenden Ueberbrückungsmasse gefüllt sind.

10. Wicklungsstab nach Anspruch 8, **dadurch gekennzeichnet, dass** in dem Bündel aus Drähten (25) zur Ankopplung an die halbleitende Bindemasse wenigstens ein Draht (25) blank belassen oder gemacht ist.

11. Wicklungsstab nach Anspruch 9, **dadurch gekennzeichnet, dass** die halbleitende Ueberbrückungsmasse in Stabrichtung ein zumindest abschnittweise nichtlineares, spannungsbegrenzendes Verhalten aufweist.

12. Verfahren zum Herstellen eines Wicklungsstabes nach Anspruch 1, bei welchem Wicklungsstab (10, 16, 32) die Isolierung (14, 22, 34) im wesentlichen aus einem thermoplastischen Material besteht, **dadurch gekennzeichnet, dass** der Wicklungsstab (10, 16, 32) nach dem Aufbringen der Isolierung (14, 22, 34) einem Kalibrierprozess unterzogen wird, bei welchem dem verformbaren Material der Isolierung (14, 22, 34) eine vorgegebene Randkontur aufgeprägt wird, welche zu einer erhöhten Dicke (d2, d4) der Isolierung (14, 22, 34) im Bereich der Kanten (40) führt.

13. Verfahren nach Anspruch 12, **dadurch gekennzeichnet, dass** die Isolierung (14, 22, 34) durch ein Verfahren aus der Reihe der Pulverbeschichtungsverfahren, insbesondere Sprühsintern oder thermisches Spritzen, und Extrusionsverfahren aufgebracht wird.

14. Verfahren nach Anspruch 13, **dadurch gekennzeichnet, dass** die Isolierung (14, 22, 34) in mehreren Schichten, insbesondere dünnen Schichten von weniger als 1 mm, vorzugsweise etwa 0,2 mm, Dicke nacheinander aufgebracht wird.

15. Verfahren nach Anspruch 14, **dadurch gekennzeichnet, dass** der Kalibrierprozess nach dem Aufbringen jeder einzelnen Schicht durchgeführt wird.

16. Verfahren nach einem der Ansprüche 12 bis 15, **dadurch gekennzeichnet, dass** zum Durchführen des Kalibrierprozesses Kalibrierwalzen (35, 36, 37) welche parallel zu den Mittelebenen (41, 42) des Wicklungsstabes (10, 16, 32) und in einem festen Abstand davon angeordnet sind, relativ zum Wicklungsstab (10, 16, 32) über dessen Oberflächen (30) bewegt werden.

17. Verfahren nach Anspruch 16, **dadurch gekennzeichnet, dass** innerhalb des Kalibrierprozesses mittels zusätzlicher Kantenrollen (38, 39) den Kanten (15, 23, 40) des Wicklungsstabes (10, 16, 32) ein vorgegebener Krümmungsradius (r3, r4) aufgeprägt wird.

18. Verfahren nach Anspruch 17, **dadurch gekennzeichnet, dass** die Kantenrollen (r3, r4) in Prozessrichtung hinter den Kalibrierwalzen (35, 36, 37) angeordnet sind.

**EP 0 951 132 B1**

19. Verfahren nach einem der Ansprüche 12 bis 18, **dadurch gekennzeichnet, dass** die Isolierung (14, 22, 34) bei erhöhten Temperaturen aufgebracht wird und der Kalibrierprozess durchgeführt wird, solange sich die aufgebrachte Isolierung (14, 22, 34) noch auf erhöhten Temperaturen befindet.

20. Verfahren nach Anspruch 19, **dadurch gekennzeichnet, dass** Kalibrierwalzen (35, 36, 37) bzw. Kalibrierrollen (38, 39) verwendet werden, welche aus einem Material mit kleiner Wärmeleitfähigkeit, insbesondere einem Glas, bestehen.

21. Verfahren nach Anspruch 19, **dadurch gekennzeichnet, dass** Kalibrierwalzen (35, 36, 37) bzw. Kalibrierrollen (38, 39) verwendet werden, welche während des Kalibrierprozesses auf erhöhte Temperaturen aufgeheizt sind.


**Claims**

1. Winding bar (10,16,32) for the high-voltage winding, in particular stator winding, of an electric machine, comprising a plurality of conductors (13;19,...,21;33) which are arranged above and/or next to one another, and a conductor bundle with a rectangular cross section, the conductor bundle being surrounded outside on all sides by an insulation (14,22,34), **characterized in that** the thickness (d2,d4) of the insulation (14,22,34) on the edges (15,23,40) of the winding bar (10,16,32) is greater than the thickness (d1,d3) of the insulation (14,22,34) on the flat sides of the winding bar (10,16,32).

2. Winding bar according to Claim 1, **characterized in that** the insulation (14,22,34) on the edges (15,23,40) of the winding bar (10,16,32) has a curvature with an inner curvature contour (r1,r5) and an outer radius of curvature (r3,r4) and **characterized in that** the outer radius of curvature (r3,r4) is smaller than the sum of the equivalent inner radius of curvature (r1,r5) of the inner curvature contour and the thickness (d1,d3) of the insulation (14,22,34) on the flat sides of the winding bar (10,16,32).

3. Winding bar according to Claim 2, **characterized in that** the inner curvature contour (r1,r5) is circular.

4. Winding bar according to Claim 2, **characterized in that** the inner curvature contour is field-optimized.

5. Winding bar according to one of Claims 1 to 4, **characterized in that** the insulation (14,22,34) consists of a thermoplastic polymer in which filler particles (29) made from an insulant are distributed.

6. Winding bar according to Claim 5, **characterized in that** polyetherether ketone (PEEK) is used as the thermoplastic polymer, and mica platelets are used as the filler particles (29).

7. Winding bar according to one of Claims 1 to 6, **characterized in that** at least the conductors (19,21) arranged in the region of the edges (23) respectively comprise a bundle of individual insulated, in particular stranded wires (25).

8. Winding bar according to Claim 7, **characterized in that** for the purpose of achieving a smooth outer contour the bundles of the wires (25) are impregnated with a semiconducting binding compound.

9. Winding bar according to one of Claims 1 to 8, **characterized in that** the conductors (13;19,...,21;33) of the winding bar (10,16,32) are spaced apart from one another by interspaces (24) and **in that** for the purpose of achieving a smooth outer contour the interspaces (24) are filled with a semiconducting bridging compound.

10. Winding bar according to Claim 8, **characterized in that** for the purpose of coupling to the semiconducting binding compound at least one wire (25) in the bundle of wires (25) is left or made bare.

11. Winding bar according to Claim 9, **characterized in that** in the bar direction the semiconducting bridging compound exhibits a voltage-limiting behavior which is nonlinear, at least in sections.

12. Method for producing a winding bar as claimed in Claim 1, in the case of which winding bar (10,16,32) the insulation (14,22,34) consists essentially of a thermoplastic material, **characterized in that** after the application of the insulation (14,22,34) the winding bar (10,16,32) is subjected to a calibration process in which there is impressed on the deformable material of the insulation (14,22,34) a prescribed edge contour which leads to an increased thickness (d2,d4) of the insulation (14,22,34) in the region of the edges (40).

9

**13.** Method according to Claim 12, **characterized in that** the insulation (14,22,34) is applied by means of a method from the range of the powder-coating methods, in particular spray sintering or thermal spraying, and extrusion methods.

**14.** Method according to Claim 13, **characterized in that** the insulation (14,22,34) is applied sequentially in a plurality of layers, in particular thin layers of less than 1 mm, preferably approximately of 0.2 mm, thickness.

**15.** Method according to Claim 14, **characterized in that** the calibration process is carried out after the application of each individual layer.

**16.** Method according to one of Claims 12 to 15, **characterized in that** for the purpose of carrying out the calibration process calibration rolls (35,36,37) which are arranged parallel to the middle planes (41,42) of the winding bar (10,16,32) and at a fixed spacing therefrom are moved relative to the winding bar (10,16,32) over the surfaces (30) thereof.

**17.** Method according to Claim 16, **characterized in that** within the calibration process a prescribed radius of curvature (r3,r4) is impressed on the edges (15,23,40) of the winding bar (10,16,32) by means of additional edge rollers (38,39).

**18.** Method according to Claim 17, **characterized in that** the edge rollers (r3,r4) are arranged downstream of the calibration rolls (35,36,37) in the process direction.

**19.** Method according to one of Claims 12 to 18, **characterized in that** the insulation (14,22,34) is applied at raised temperatures, and the calibration process is carried out as long as the applied insulation (14,22,34) is still at raised temperatures.

**20.** Method according to Claim 19, **characterized in that** use is made of calibration rolls (35,36,37) or calibration rollers (38,39) which consist of a material with a low thermal conductivity, in particular of glass.

**21.** Method according to Claim 19, **characterized in that** use is made of calibration rolls (35,36,37) or calibration rollers (38,39) which are heated to raised temperatures during the calibration process.

**Revendications**

**1.** Barreau de bobine (10, 16, 32) pour bobine à haute tension d'une machine électrique, en particulier pour la bobine de stator, qui comprend plusieurs conducteurs (13; 19, ..., 21; 33) qui sont disposés les uns au-dessus des autres et/ou à côté des autres et qui forment un faisceau de conducteurs de section transversale rectangulaire, l'extérieur du faisceau de conducteurs étant entouré de tous côtés par une isolation (14, 22, 34), **caractérisé en ce que** l'épaisseur (d2, d4) de l'isolation (14, 22, 34) sur les arêtes (15, 23, 40) du barreau de bobine (10, 16, 32) est plus grande que l'épaisseur (d1, d3) de l'isolation (14, 22, 34) sur les côtés plats du barreau de bobine (10, 16, 32).

**2.** Barreau de bobine selon la revendication 1, **caractérisé en ce que** sur les arêtes (15, 23, 40) du barreau de bobine (10, 16, 32), l'isolation (14, 22, 34) présente une courbure qui a un contour intérieur (r1, r5) et un rayon de courbure extérieur (r3, r4) et **en ce que** le rayon de courbure extérieur (r3, r4) est plus petit que la somme du rayon intérieur de courbure équivalent (r1, r5) du contour intérieur de la courbure et de l'épaisseur (d1, d3) de l'isolation (14, 22, 34) sur le côté plat du barreau de bobine (10, 16, 32).

**3.** Barreau de bobine selon la revendication 2, **caractérisé en ce que** le contour intérieur de la courbure (r1, r5) est de forme circulaire.

**4.** Barreau de bobine selon la revendication 2, **caractérisé en ce que** le contour intérieur de la courbure est optimisé en termes de champ.

**5.** Barreau de bobine selon l'une des revendications 1 à 4, **caractérisé en ce que** l'isolation (14, 22, 34) est constituée d'un polymère thermoplastique dans lequel des particules de charge (29) en matière isolante sont réparties.

**6.** Barreau de bobine selon la revendication 5, **caractérisé en ce que** comme polymère thermoplastique, on utilise la polyétheréthercétone (PEEK) et comme particules de charge (29) des plaquettes de mica.

**7.** Barreau de bobine selon l'une des revendications 1 à 6, **caractérisé en ce qu'**au moins les conducteurs (19, 21) disposés dans la zone des arêtes (23) sont tous constitués d'un faisceau de fils (25) individuels, isolés et en particulier tressés les uns avec les autres.

**8.** Barreau de bobine selon la revendication 7, **caractérisé en ce qu'**en vue d'obtenir un contour extérieur lisse, les faisceaux constitués des fils (25) sont imprégnés d'une pâte de liant semi-conductrice.

**9.** Barreau de bobine selon l'une des revendications 1 à 8, **caractérisé en ce qu'**en vue d'obtenir un contour extérieur lisse, les conducteurs (13; 19, ..., 21; 33) du barreau de bobine (10, 16, 32) sont maintenus à distance les uns des autres par des espaces intermédiaires (24) et **en ce que** les espaces intermédiaires (24) sont remplis d'une pâte de pontage semi-conductrice.

**10.** Barreau de bobine selon la revendication 8, **caractérisé en ce qu'**au moins un fil (25) du faisceau de fils (25) est laissé nu ou est dénudé pour assurer le raccordement à la pâte de liant semi-conductrice.

**11.** Barreau de bobine selon la revendication 9, **caractérisé en ce que** dans la direction du barreau, la pâte semi-conductrice de pontage présente un comportement de limitation de la tension au moins par parties non linéaire.

**12.** Procédé de fabrication d'un barreau (10, 16, 32) de bobine selon la revendication 1, dans lequel l'isolation (14, 22, 34) est essentiellement constituée d'un matériau thermoplastique, **caractérisé en ce qu'**après l'application de l'isolation (14, 22, 34), le barreau de bobine (10, 16, 32) subit une opération de calibrage dans laquelle un contour extérieur prédéterminé est conféré au matériau déformable de l'isolation (14, 22, 34) et entraîne une augmentation de l'épaisseur (d2, d4) de l'isolation (14, 22, 34) dans la zone des arêtes (40).

**13.** Procédé selon la revendication 12, **caractérisé en ce que** l'isolation (14, 22, 34) est appliquée par un procédé sélectionné parmi les procédés de revêtement par poudre, en particulier les procédés par pulvérisation-frittage ou par pulvérisation thermique et le procédé d'extrusion.

**14.** Procédé selon la revendication 13, **caractérisé en ce que** l'isolation (14, 22, 34) est appliquée en plusieurs couches successives et en particulier en couches minces d'une épaisseur inférieure à 1 mm et de préférence d'environ 0,2 mm.

**15.** Procédé selon la revendication 14, **caractérisé en ce que** l'opération de calibrage est réalisée après l'application de chaque couche individuelle.

**16.** Procédé selon l'une des revendications 12 à 15, **caractérisé en ce que** pour réaliser l'opération de calibrage, on déplace des cylindres de calibrage (35, 36, 37) disposés parallèlement aux plans centraux (41, 32) du barreau de bobine (10, 16, 32) et à distance fixe de ces derniers sur la surface (30) du barreau de bobine (10, 16, 32).

**17.** Procédé selon la revendication 16, **caractérisé en ce que** lors de l'opération de calibrage, on confère au moyen de galets d'arête supplémentaires (38, 39) un rayon de courbure prédéterminé (r3, r4) aux arêtes (15, 23, 40) du barreau de bobine (10, 16, 32).

**18.** Procédé selon la revendication 17, **caractérisé en ce que** les galets d'arête (r3, r4) sont disposés dans la direction du traitement en aval des cylindres de calibrage (35, 36, 37).

**19.** Procédé selon l'une des revendications 12 à 18, **caractérisé en ce que** l'isolation (14, 22, 34) est appliquée à haute température et **en ce que** l'opération de calibrage est réalisée pendant que l'isolation (14, 22, 34) appliquée est encore à haute température.

**20.** Procédé selon la revendication 19, **caractérisé en ce que** les cylindres de calibrage (35, 36, 37) et les galets de calibrage (38, 39) utilisés sont constitués d'un matériau à faible conductivité thermique et en particulier en verre.

**21.** Procédé selon la revendication 19, **caractérisé en ce que** les cylindres de calibrage (35, 36, 37) et les galets de calibrage (38, 39) utilisés sont chauffés à haute température pendant l'opération de calibrage.

*Fig. 1*

*Fig. 2*

Fig.3

Fig.4

*Fig.5*

*Fig.6*

*Fig.7*

*Fig.8*